# EUROPÄISCHE PATENTANMELDUNG

(11) **EP 0 896 890 A2**
(43) Veröffentlichungstag der Anmeldung: **17.02.1999**
(21) Anmeldenummer: 98112832.5
(22) Anmeldetag: 10.07.1998
(51) Int. Cl.: B60H 1/26

(54) **Abdeckhaube für eine einen unteren Deckel aufweisende Dachluke**

(30) Priorität: 12.08.1997 DE 29714402 U
(71) Anmelder: MPK Metall- und Plastikverarbeitung GmbH & Co. KG, 58566 Kierspe (DE)
(72) Erfinder: Stellbrink, Bernd, D-48157 Münster (DE)
(74) Vertreter: Schulze Horn & Partner GbR

(57) **Zusammenfassung**

Die Erfindung betrifft eine Abdeckhaube für eine einen unteren Deckel aufweisende Dachluke, insbesondere für Wohnwagen, wobei die Abdeckhaube ein allgemein ebenes Gitterrost (1) mit etwa quadratischem Umriß aufweist, an dem mindestens zwei in Richtung zur Dachluke aufragende, federnde Rasthaken befestigt sind, an denen ein Lüftergehäuse einrastbar ist, wobei das Gitterrost (1) einen umlaufenden, in Richtung zur Dachluke aufragenden Rand (2) aufweist, dessen Höhe größer ist als die Höhe der mindestens zwei federnden Rasthaken, wobei am Rand (2) mindestens zwei in Richtung zur Dachluke aufragende, federnde Rasthaken (3) befestigt sind, mit denen die Abdeckhaube an dem unteren Deckel einrastbar ist.

## Beschreibung

Die vorliegende Erfindung betrifft eine Abdeckhaube für eine einen unteren Deckel aufweisende Dachluke, insbesondere für Wohnwagen. Eine derartige Abdeckhaube ist bisher nicht bekanntgeworden.

Aus der DE-PS 30 03 224 ist eine Dachluke, insbesondere für Wohnwagen bekannt, mit einem Lukenrahmen, einem Lukendeckel und einem motorisch angetriebenen Lüfter, wobei der vom Lukenrahmen gehaltene Lukendeckel aus einer den Lukenrahmen rundum überragenden, außenliegenden Deckelhaube und einem im Abstand zur Deckelhaube liegenden Deckelboden besteht, wobei in der geschlossenen Stellung die Dachluke eine nichtverschließbare Öffnung aufweist, die aus einer oder mehreren Luftdurchtrittsöffnungen besteht, die über mindestens einen Luftkanal mit dem Lüfter verbunden sind, wobei der Lüfter im Deckelboden und die nichtverschließbaren Öffnungen zwischen Deckelhaube und Deckelboden angeordnet sind.

Bei der Anbringung des Lüfters an der Deckelhaube entsteht der Nachteil, daß ein nur sehr kleiner Ventilator mit entsprechend geringer Leistung eingesetzt werden kann.

Es ist die Aufgabe der vorliegenden Erfindung, eine Abdeckhaube für eine bekannte Dachluke zu schaffen, in der ein ausreichend großer, als solcher bekannter Lüfter aufnehmbar ist, wobei die Abdeckhaube lösbar am unteren Deckel zu befestigen ist.

Die Lösung der Aufgabe erfolgt mit einer Abdeckhaube mit den Merkmalen des Schutzanspruchs 1.

Die erfindungsgemäße Abdeckhaube weist ein allgemein ebenes Gitterrost mit etwa quadratischem Umriß auf, an dem mindestens zwei in Richtung zur Dachluke aufragende federnde Rasthaken befestigt sind, wobei das Gitterrost einen umlaufenden, in Richtung zur Dachluke aufragenden Rand aufweist, dessen Höhe größer ist als die Höhe der mindestens zwei federnden Rasthaken, wobei am Rand mindestens zwei in Richtung zur Dachluke aufragende federnde Rasthaken befestigt sind, mit denen die Abdeckhaube an dem unteren Deckel einrastbar ist.

Dadurch kann ein genügend großer Raum in der Abdeckhaube durch entsprechende Gestaltung des Randes geschaffen werden, in dem ein genügend großer Lüfter mit seinem Gehäuse an den Rasthaken des Gitterrostes befestigbar ist. Die Abdeckhaube zusammen mit dem Lüfter wird dann mit dem am Rand angebrachten Rasthaken an den Lüftungsschlitzen des unteren Deckels befestigt.

Bevorzugt weist das Gitterrost rechtwinklig miteinander verbundene Versteifungsrippen auf, die bei ausreichender Stabilität eine einfache Fertigung ermöglichen.

In einer bevorzugten Ausgestaltung ist vorgesehen, daß vier an den Ecken eines ersten Quadrats angeordnete erste Rasthaken jeweils an Querrippen befestigt sind, die zwei durchlaufende Längsrippen verbinden, daß vier an den Ecken eines zweiten Quadrats, das größer ist als das erste Quadrat, angeordnete zweite Rasthaken, die höher aufragen als die ersten Rasthaken, jeweils an Querrippen befestigt sind, die mehrere durchlaufende Längsrippen verbinden, daß mehrere, zum zweiten Quadrat verlaufende Längsrippenabschnitte im Bereich zwischen Rand und zweitem Quadrat höher aufragen als in ihrem verbleibenden Längsrippenabschnitt, dessen Höhe gleich der Höhe der Querrippen ist, und daß die beiden das zweite Quadrat begrenzenden Längsrippen durchgehend höher aufragen.

Diese Ausgestaltung bietet den Vorteil, daß der Lüfter an den ersten Rasthaken einrastbar ist, wobei dann je nach dem Typ einer nachrüstbaren Dachluke entweder die zweiten Rasthaken der Befestigung an dieser dienen, oder die am Rand befestigten Rasthaken mit der Dachluke verrastet werden. Die höheren Längsrippenabschnitte, wobei auch wahlweise Querrippenabschnitte höher sein können, dienen der Festlegung des Lüftergehäuses.

Zweckmäßig ist in zwei Ecken des Gitterrostes jeweils ein versteifungsrippenfreier Bereich vorhanden, in dem jeweils mindestens eine Öffnung vorhanden ist, in der Schalter oder Kabeldurchführungen unterbringbar sind.

Zur gefälligeren Gestaltung ist vorgesehen, daß der Rand nach außen treppenförmig mit runden Übergängen gestaltet ist, und es ist ebenfalls zweckmäßig, daß am Rand vier paarweise gegenüberliegende federnde Rasthaken befestigt sind, um einen sicheren Halt zu gewährleisten.

Aus Fertigungsgründen ist zweckmäßig die Abdeckhaube einstückig aus Kunststoff gefertigt.

Eine bevorzugte Ausgestaltung der Erfindung wird nunmehr anhand einer Zeichnung näher erläutert. Sie zeigt in
- Figur 1: eine Ansicht der nach unten weisenden Seite der Abdeckhaube, in
- Figur 2: einen Schnitt entlang der Linie I - I in Figur 1, und in
- Figur 3: eine Ansicht der nach oben weisenden Seite der Abdeckhaube.

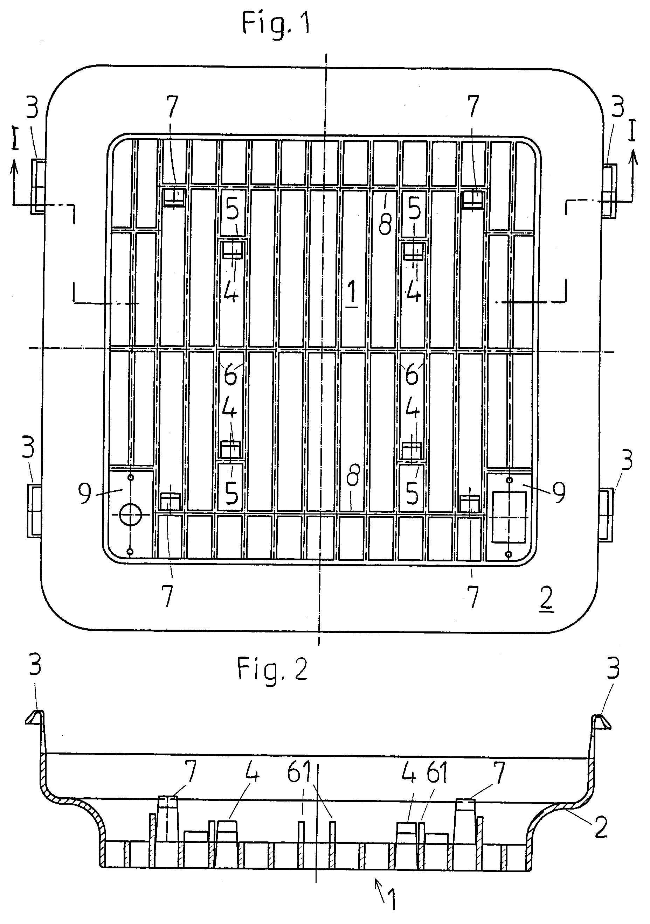

Mit Bezugnahme auf Figur 1 ist ein Gitterrost 1 dargestellt, welches einen etwa quadratischen Umriß mit abgerundeten Ecken aufweist. Das Gitterrost 1 weist insgesamt drei Querrippen 8 auf, und eine Vielzahl von rechtwinklig damit verbundenen Längsrippen 6. Um das Gitterrost 1 verläuft ein Rand 2 mit abgerundeten Ecken, an dem insgesamt vier Rasthaken 3 paarweise gegenüberliegend befestigt sind.

In dem Gitterrost 1 befinden sich zwischen jeweils zwei Längsrippen 6 kurze Querrippen 5, an denen erste Rasthaken 4 so angeordnet sind, daß sie in den Ecken eines ersten Quadrats liegen. An den Ecken eines größeren Quadrats liegen zweite Rasthaken 7, die jeweils an Querrippen 8 befestigt sind. An den Rasthaken ist ein Lüftergehäuse einrastbar.

In der Figur 1 in den unteren beiden Ecken liegen zwei Bereiche 9, die frei von Versteifungsrippen sind und Öffnungen aufweisen, wobei die rechte Öffnung rechtwinklig und die linke Öffnung rund ist. Diese Öffnungen können zum Einsatz eines Schalters oder Durchführung eines Kabels verwendet werden.

In der Figur 2 ist die treppenförmige Gestalt des Randes 2 mit den aufragenden Rasthaken 3 erkennbar, wobei deren Haken nach außen weisen. Die zweiten Rasthaken 7 ragen höher auf als die ersten Rasthaken 4. Es sind Längsrippenabschnitte 61 erkennbar, die eine größere Höhe aufweisen, und zwar im Bereich zwischen dem Rand 2 und den Querrippen 8, die das zweite Quadrat begrenzen. Diese Längsrippenabschnitte 61 dienen zur Festlegung des Lüftergehäuses bzw. der Abdeckhaube bei einer anderen Deckelkonstruktion.

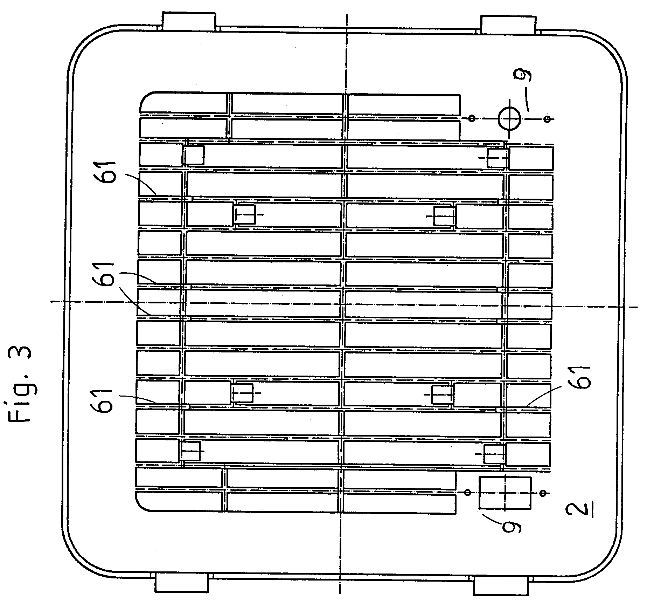

Figur 3 zeigt die nach oben weisende Seite, wobei die Dimension der Längsrippenabschnitte 61 erkennbar ist. Weiter sind die Bereiche 9 sichtbar, die glatt in den Rand 2 übergehen.

## Patentansprüche

1. Abdeckhaube für eine einen unteren Deckel aufweisende Dachluke, insbesondere für Wohnwagen, wobei die Abdeckhaube ein allgemein ebenes Gitterrost (1) mit etwa quadratischem Umriß aufweist, an dem mindestens zwei in Richtung zur Dachluke aufragende, federnde Rasthaken befestigt sind, an denen ein Lüftergehäuse einrastbar ist, wobei das Gitterrost (1) einen umlaufenden, in Richtung zur Dachluke aufragenden Rand (2) aufweist, dessen Höhe größer ist als die Höhe der mindestens zwei federnden Rasthaken, wobei am Rand (2) mindestens zwei in Richtung zur Dachluke aufragende, federnde Rasthaken (3) befestigt sind, mit denen die Abdeckhaube an dem unteren Deckel einrastbar ist.

2. Abdeckhaube nach Anspruch 1, dadurch gekennzeichnet, daß das Gitterrost (1) rechtwinklig miteinander verbundene Versteifungsrippen aufweist.

3. Abdeckhaube nach Anspruch 2, dadurch gekennzeichnet, daß vier an den Ecken eines ersten Quadrats angeordnete erste Rasthaken (4) jeweils an Querrippen (5) befestigt sind, die zwei durchlaufende Längsrippen (6) verbinden, daß vier an den Ecken eines zweiten Quadrats, das größer ist als das erste Quadrat, angeordnete zweite Rasthaken (7), die höher aufragen als die ersten Rasthaken (4), jweils an Querrippen (8) befestigt sind, die mehrere durchlaufende Längsrippen (6) verbinden, daß mehrere, zum zweiten Quadrat verlaufende Längsrippenabschnitte (61) im Bereich zwischen Rand (2) und zweitem Quadrat höher aufragen als in ihrem verbleibenden Längsrippenabschnitt, dessen Höhe gleich der Höhe der Querrippen (8, 5) ist, und daß die beiden das zweite Quadrat begrenzenden Längsrippen (6) durchgehend höher aufragen.

4. Abdeckhaube nach Anspruch 2 oder 3, dadurch gekennzeichnet, daß in zwei Ecken des Gitterrostes ein versteifungsrippenfreier Bereich (9) vorhanden ist, in dem jeweils mindestens eine Öffnung vorhanden ist.

5. Abdeckhaube nach einem der vorhergehenden Ansprüche, dadurch gekennzeichnet, daß der Rand (2) nach außen treppenformig mit runden Übergängen gestaltet ist.

6. Abdeckhaube nach einem der vorhergehenden Ansprüche, dadurch gekennzeichnet, daß am Rand (2) vier, paarweise gegenüberliegende, federnde Rasthaken (3) befestigt sind.

7. Abdeckhaube nach einem der vorhergehenden Ansprüche, dadurch gekennzeichnet, daß die Abdeckhaube einstückig aus Kunststoff gefertigt ist.
